# EUROPÄISCHE PATENTSCHRIFT

(11) **EP 1 353 418 B1**
(45) Veröffentlichungstag und Bekanntmachung des Hinweises auf die Patenterteilung: **03.11.2010**
(21) Anmeldenummer: 03007271.4
(22) Anmeldetag: 31.03.2003
(51) Int. Cl.: G05B 19/042, G05B 9/02, G05B 23/02, H01R 13/703

(54) **System zur Ankopplung einer mobilen Dateneinheit an einen Feldbus**
System for connecting a mobile data unit to a fieldbus
Système pour connecter une unité de données à un bus de terrain

(30) Priorität: 12.04.2002 DE 20205700 U
(43) Veröffentlichungstag der Anmeldung: 15.10.2003
(73) Patentinhaber: SIEMENS AKTIENGESELLSCHAFT, 80333 München (DE)
(72) Erfinder: Gruner, Wolfgang, 90469 Nürnberg (DE); Rieger, Gottfried, 90766 Fürth (DE)

(56) Entgegenhaltungen:
- EP-A- 0 553 359
- EP-A- 0 770 942
- DE-A1- 10 013 529

## Beschreibung

Die Erfindung betrifft einen variablen Anschluß von mobilen Dateneinheiten an einen Feldbus, insbesondere von mobilen Handheld- Bediengeräten. Diese können z.B. im industriellen Einsatz zur Steuerung und Bedienung von produktionstechnischen Anlagen eingesetzt werden.

In modernen Anlagen der Industrie, insbesondere automatisierten Fertigungsanlagen, werden mobile Bedien- und Beobachtungssysteme benötigt. Diese sind nicht an einen bestimmten Ort gebunden, sondern können abhängig von aktuellen Notwendigkeiten an wechselnden Einsatzplätzen angesteckt werden. Weiterhin sind bei industriellen Systemen Feldbusse als Standard für vernetzte Computersysteme anzusehen. Es ist somit für Anwender wichtig, mobile Geräte, insbesondere Bedien- und Beobachtungsgeräte oder sogenannte Handheld's, auf einfache Weise und ohne Einschränkung von Sicherheitsfunktionen an beliebigen Stellen an Feldbusse anschließen zu können. Insbesondere müssen Bedien- und Beobachtungsgeräte, die über einen Notaus- Taster verfügen, und dazugehörige zentrale Notaus-Überwachungseinrichtungen weiterhin funktionsfähig bleiben.

Eine wesentliche Notwendigkeit bei Systemen der oben beschriebenen Art besteht darin, dass ein störungsfreies Umschalten bzw. Routing des Notaus- Kreises auch bei einem Stecken bzw. Ziehen von Bedien- und Beobachtungsgeräten an Access Points eines Feldbusses möglich ist, ohne dass dabei versehentlich eine Notaus- Überwachung aktiviert und die gesamte Anlage heruntergefahren wird.

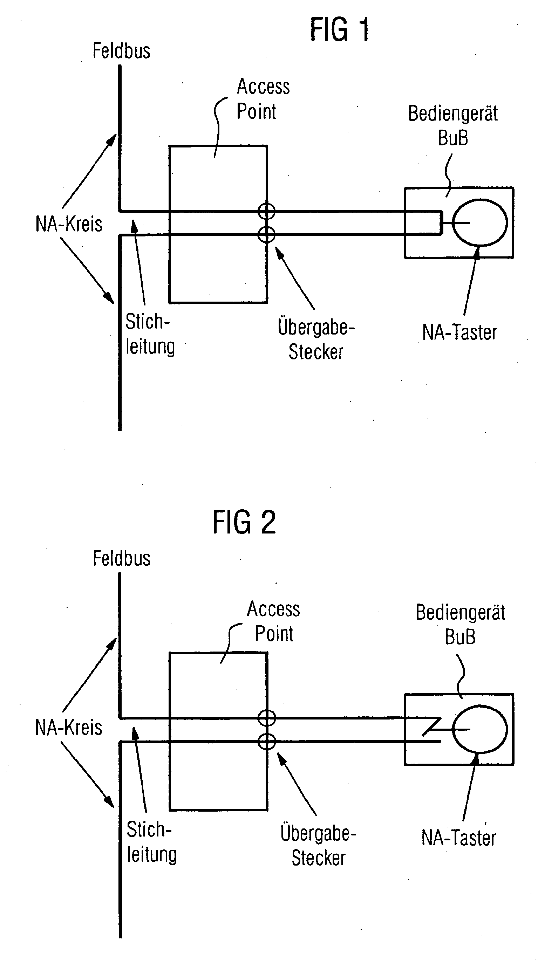

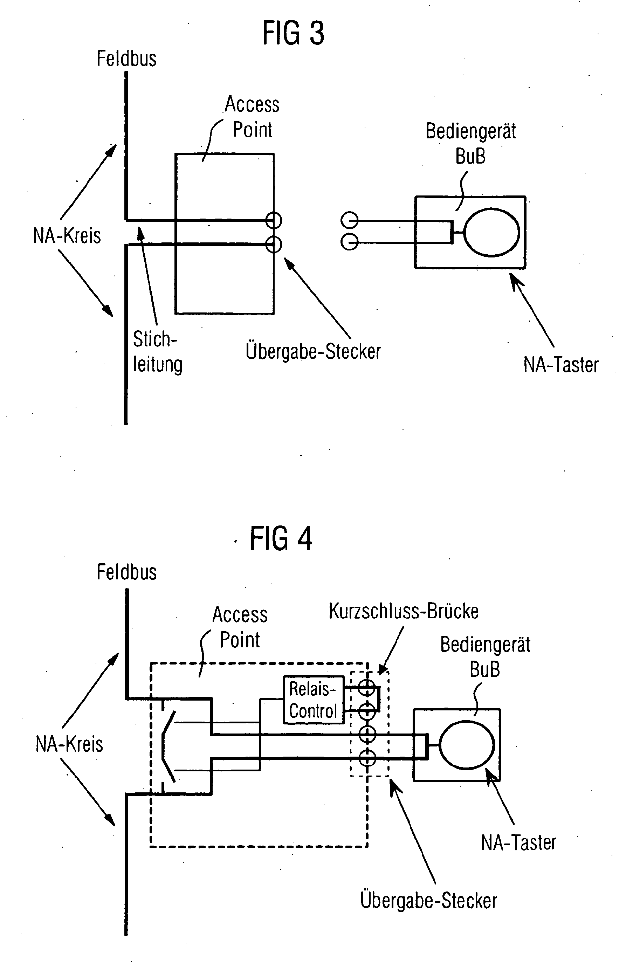

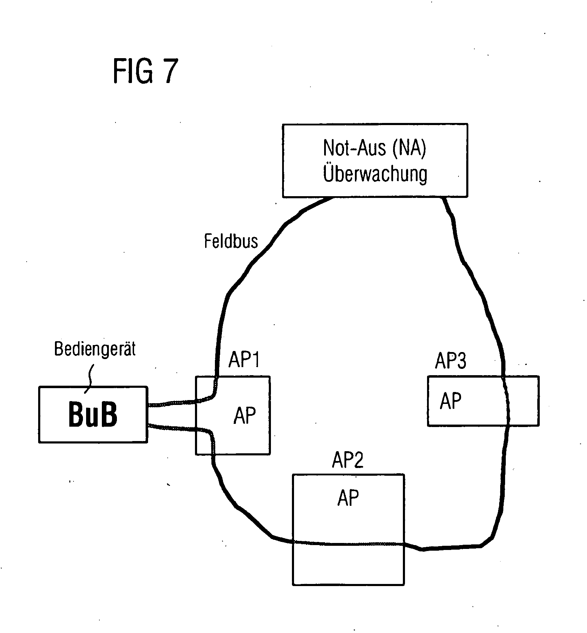

In den Figuren 1 bis 3 sind bekannte Notaus-Systeme beispielhaft dargestellt. Bei diesen wird der Notaus-Kreis über die Stichleitung direkt über das Bedien- und/oder Beobachtungsgerät geschleift. Figur 1 zeigt einen derart durchgeschleiften Notaus- Kreis. Im Falle eines Notfalles kann der Notaus-Taster NA am Bedien- und/oder Beobachtungsgerät betätigt werden. Ein solcher Zustand ist in Figur 2 dargestellt. Mit Unterbrechung des Notaus- Kreises wird eine übergeordnete Not-Aus (NA) Überwachungseinrichtung, wie z.B. in Figur 7 dargestellt, aktiv. Bei der beschriebenen Anordnung tritt das Problem auf, dass ein Abstecken des Bedien- und/oder Beobachtungsgeräts, wie in Figur 3 dargestellt, die gleiche Wirkung wie eine Betätigung des Notaus Tasters hat. Dabei wird also der Notaus- Kreis und die diesen überwachende Überwachungseinrichtung aktiviert, was bei einem Abstecken des Bedien- und/oder Beobachtungsgeräts aber unerwünscht ist.

Auch DE 100 13 529 A1 beschreibt mit einem Bussystem zum Anschluss von Anschlusskomponenten über Verteiler an die Leitungen des Bussystems die zuvor genannte nachteilige Anordnung, insbesondere beim Abbrennen von Not-Aus Tastern von dem Bussystem.

In EP 0 553 359 A1 wird eine Notfallabschaltung eines Roboters offenbart, welche bei Abstecken eines Bedienpanels vom Roboter den Roboter abschaltet.

Das Abschalten des Roboters kann durch einen Schalter an der Ankopplungseinheit verhindert werden.

Zur Lösung dieses Problems ist gemäß der vorliegenden Erfindung in einer Ankopplungseinheit an den Feldbus, auch Access Point genannt, eine Vorrichtung integriert, die im Falle eine Absteckens eines Bedien- und Beobachtungsgerätes den Notaus-Kreis geschlossen hält. Es werden also unerwünschte bevorzugt Unterbrechungen vermieden. Andererseits ist im gesteckten Zustand des Bedien- und Beobachtungsgerätes eine gezielte Unterbrechung des Notaus- Kreises durch eine Betätigung des Notaus- Tasters möglich.

Die Erfindung wird am Beispiel von Ausführungsformen näher erläutert. Diese sind in den nachfolgend kurz angeführten Figuren dargestellt. Dabei zeigt
- Figur 1: den Aufbau eines Notaus- Kreises nach dem Stand der Technik am Beispiel eines an einem Feldbus ange- schlossenen Bedien- und Beobachtungsgeräts,
- Figur 2: den Notaus- Kreis von Figur 1 im einem Zustand, bei dem der Notaus Taster im Bedien- und Beobachtungs- geräts aktiviert und dadurch der Notaus- Kreis ge- öffnet ist,
- Figur 3: den Notaus- Kreis von Figur 1 im einem Zustand, bei dem der Notaus- Kreis durch ein Abstecken des Bedien- und Beobachtungsgeräts geöffnet ist,
- Figur 4: den Aufbau eines Notaus- Kreises nach der Erfindung, am Beispiel eines an einem Feldbus angeschlossenen gerouteten Bedien- und Beobachtungsgeräts,
- Figur 5: den erfindungsgemäßen Notaus- Kreis nach Figur 4 in einem Zustand, bei dem dieser wegen eines abgesteckten Bedien- und Beobachtungsgeräts im Access Point gebrückt ist,
- Figur 6: den erfindungsgemäßen Notaus- Kreis nach Figur 4 in einem Zustand, bei dem dieser bei angestecktem Bedien- und Beobachtungsgerät im Access Point und gedrücktem Notaus-Taster geroutet ist,
- Figur 7: einen Notaus- Kreis gemäß der Erfindung am Beispiel eines Feldbusses, bei dem an einem Access Point ein Bedien- und Beobachtungsgerät angeschlossen ist und weitere Access Points zur Sicherstellung der Notaus- Funktion im Netz geroutet sind,
- Figur 8: einen Notaus- Kreis gemäß der Erfindung am Beispiel eines in einer industriellen Produktionsanlage eingesetzen Feldbusses, bei dem eine Vielzahl von Access Points zum Anschluß eines Bedien- und Beobachtungsgeräts vorhanden sind.

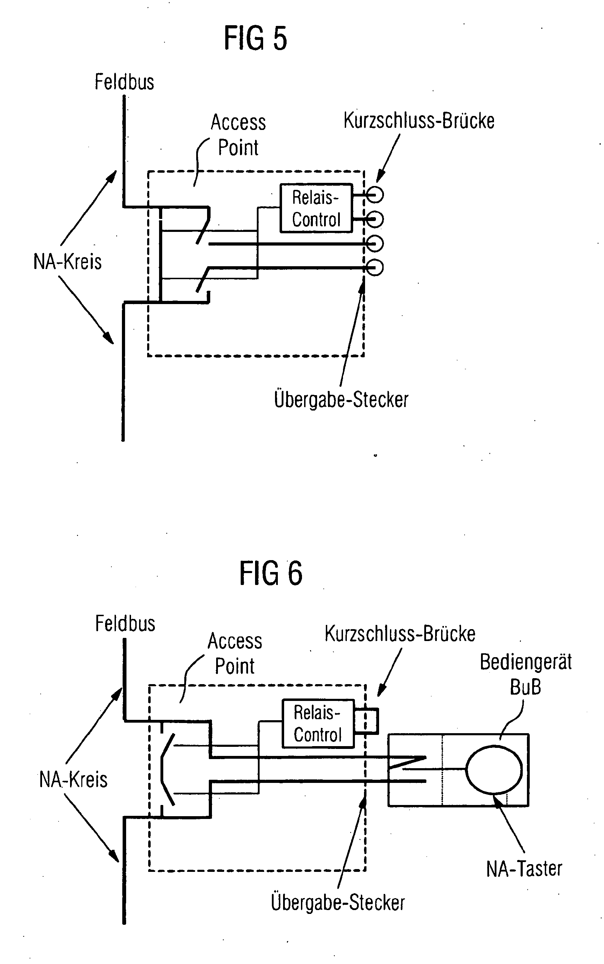

Bevorzugte Ausführungsformen der Erfindung sind in den Figuren 4 bis 6 dargestellt. Die Erfindung beruht auf dem Prinzip, dass in dem Stecker, der die Kontaktierung des Bedienund Beobachtungsgeräts mit einem Access Point z.B. an einem Feldbus ermöglicht, eine mechanische Betätigung eingebaut ist. Diese kann beispielsweise in Form eines Kurzschlußsteckers ausgeführt sein. Ein solcher ist im Beispiel der Figur 4 dargestellt. Im gesteckten Zustand des Steckers am Access Point ist die mechanische Betätigung aktiv und schaltet den Notaus- Kreis derartig durch, dass eine Notaus- Betätigung über den Notaus- Taster des Bedien- und Beobachtungsgeräts möglich ist. Wird das Bedien- und Beobachtungsgerät durch Ziehen des Steckers entfernt, so bewirkt die mechanische Betätigung eine Durchschleifung des Notaus- Kreises im Access Point. Der Notaus- Kreis bleibt also geschlossen und es wird durch eine übergeordnete Notaus- Überwachung kein versehentlicher Alarm ausgelöst.

Bei den in Figuren 4 bis 6 dargestellten Ausführungsformen weist die im Access Point integrierte mechanische Betätigung einen Satz von Schaltkontakten auf, die von einem Relais angesteuert werden. Werden die Schaltkontakte über das Relais angesteuert, so wird eine Verbindungsbrücke in den Notaus-Kreis zugeschaltet. Die Aktivierung des Relais erfolgt bevorzugt über eine Kurzschluss-Brücke, die im Stecker zwischen Access Point und Handheld angeordnet ist. Im gesteckten Zustand des Steckers ist die Brücke geschlossen, so dass das Relais die Schaltkontakte offen hält. Wird der Stecker gezogen und die Brücke unterbrochen, so fällt das Relais ab und die Schaltkontakte werden geschlossen. Das Bedien- und Beobachtungsgerät ist dann abgetrennt, ohne dass bei diesem Vorgang versehentlich der Notaus- Überwachungsmechanismus eine Fehlalarm auslöst.

Die erfindungsgemäße automatischen Not-Aus (NA)-Überbrückung ist insbesondere für mobile Bedien- und Beobachtungssysteme verwendbar, die bei Systemen der Industrie eingesetzt werden.

Die Erfindung ermöglicht ein automatisches Routing des Notaus- NA-Kreises über ein angestecktes Bedien- und Beobachtungsgerät bzw. ein Handheld mit dessen Notaus- NA-Taster. Andererseits ermöglicht die Erfindung ein automatisches Routing des Notaus- NA- Kreises durch den Access Point bei einem nicht angesteckten Bedien- und Beobachtungsgerät bzw. Handheld. Die Erfindung ermöglicht einerseits eine ständige Überwachung des Notaus- NA-Kreises auf Unterbrechung. Beim Abziehen des Bediengerätes von einem Access Point wird der NA-Kreis nicht unterbrochen. Andererseits wird beim Anstecken des Bediengerätes der Notaus- NA-Kreis wieder über den NA-Taster geführt.

Im Beispiel der Figur 7 ist eine Anwendung der Erfindung am Beispiel eines Feldbusses gezeigt, der beispielhaft drei Access Points AP1 - AP3 aufweist. Ein Bediengerät BuB kann an die Access Points angeschlossen werden. Im Beispiel der Figur 7 ist das Bediengerät am Access Point AP1 angeschlossen. Auf Grund der erfindungsgemäßen Ausführung der Access Points ist der Notaus- Kreis am Access Point AP1 durch das BuB Gerät geschleift, d.h. geroutet, während er durch die Access Points AP2 und AP3 durchgeschleift, d.h. gebrückt, ist. Das Bedienund Beobachtungsgerät kann von einem Benutzer beliebig vom Access Point AP1 abgesteckt und an einen der Access Points AP2 bzw. AP3 angeschlossen werden, ohne dass dabei versehentlich die zentrale Not-Aus (NA) Überwachung aktiviert wird.

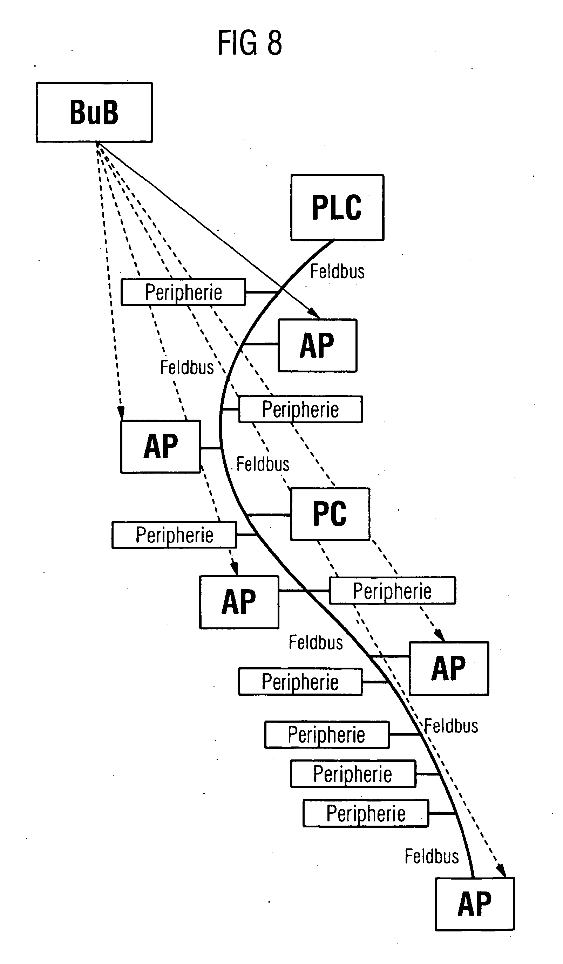

Figur 8 zeigt beispielhaft eine gegenüber Figur 7 erweiterte Anlagenkonfiguration. Dabei wird ein Feldbus von einer Process Logic Control PLC, d.h. insbesondere einer industriellen Steuerung, gespeist. An den Feldbus sind eine Vielzahl von Peripherie Geräten angeschlossen. Diese weisen Funktionen auf, die in der jeweiligen Einsatzumgebung der dargestellten Anlagenkonfiguration benötigt werden. Vielfach handelt es sich dabei um sogenannte intelligente I/O Module, die den Datentransfer zu einem angeschlossenen Anlagenbetriebsmittel ermöglichen. In Figur 8 sind aus Gründen der besseren Übersicht keine Anlagenbetriebsmittel dargestellt. Weiterhin ist beispielhaft eine zusätzlicher PC an den Feldbus angeschlossen. Dieser kann die Aufgabe eines Steuerrechners übernehmen, um z.B. Diagnosen, Archivierungen und Ankopplungen z.B. an das Internet durchzuführen. An den Feldbus sind verteilt angeordnete und erfindungsgemäß gestaltete Access Points AP angeschlossen. Für einen Anwender besteht nun die Möglichkeit, eine BuB Gerät je nach Bedarf an einen der Access Points anzuschließen. In einer großen industriellen Anlage ist es somit nicht mehr unbedingt erforderlich, stationäre BuB Geräte verteilt zu plazieren, um eine sichere Bedienung und Beobachtung aller Peripheriegeräte und Anlagenbetriebsmittel zu gewährleisten. Vielmehr kann eine BuB Gerät an denjenigen Access Point AP angeschlossen werden, der lokal eine aktuelle zu bedienenden oder zu beobachtenden Betriebsmittel am nächsten liegt.

## Patentansprüche

1. System zur Ankopplung einer mobilen Dateneinheit (BuB) an einen Feldbus, umfassend eine Ankopplungseinheit (AP), welche an den Feldbus angeschlossen ist, **dadurch gekennzeichnet, dass** die Ankopplungseinheit (AP) eine Vorrichtung aufweist, die im angekoppelten Zustand der mobilen Dateneinheit einen Notaus- Kreis des Feldbusses durch die Dateneinheit (BuB) schleift und im abgekoppelten Zustand kurzschließt.

2. System nach Anspruch 1, wobei die mobile Dateneinheit ein mobiles Bedien- und/oder Beobachtungsgerät ist.

3. System nach einem der vorangegangenen Ansprüche, wobei die mobile Dateneinheit einen Notaus- Taster aufweist.

4. System nach einem der vorangegangenen Ansprüche, wobei die Vorrichtung eine schaltbare Kurzschlussbrücke aufweist.

5. System nach Anspruch 4, wobei die schaltbare Kurzschlussbrücke von einem Relais angesteuert wird.

6. System nach Anspruch 5, wobei das Relais von einer Kurzschlussbrücke angesteuert wird, die im angekoppelten Zustand der mobilen Dateneinheit geschlossen und im abgekoppelten Zustand geöffnet ist.

7. System nach Anspruch 6, wobei die Kurzschlussbrücke in einer Steckverbindung integriert ist, die eine lösbare Kontaktierung einer mobilen Dateneinheit an eine Ankopplungseinheit (AP) ermöglicht.

## Claims

1. System for coupling a mobile data unit (BuB) to a field bus, comprising a coupling unit (AP) which is connected to the field bus, **characterized in that** the coupling unit (AP) has an apparatus which, when the mobile data unit is coupled, loops an emergency shutdown circuit of the field bus through the data unit (BuB) and, when the mobile data unit is uncoupled, short-circuits said emergency shutdown circuit.

2. System according to Claim 1, the mobile data unit being a mobile control and/or observation device.

3. System according to one of the preceding claims, the mobile data unit having an emergency shutdown button.

4. System according to one of the preceding claims, the apparatus having a switchable short-circuit bridge.

5. System according to Claim 4, the switchable short-circuit bridge being driven by a relay.

6. System according to Claim 5, the relay being driven by a short-circuit bridge which is closed when the mobile data unit is coupled and is open when the mobile data unit is uncoupled.

7. System according to Claim 6, the short-circuit bridge being integrated in a plug connection which makes it possible to releasably contact-connect a mobile data unit to a coupling unit (AP).

## Revendications

1. Système de connexion d'une unité ( BuB ) mobile à un bus de terrain, comprenant une unité ( AP ) de connexion, qui est raccordée au bus de terrain, **caractérisé en ce que** l'unité ( AP ) de connexion a un dispositif qui, lorsque l'unité mobile de données est à l'état connecté, boucle un circuit de secours du bus de terrain par l'unité ( BuB ) de données et, lorsqu'elle est à l'état déconnecté, le court-circuite.

2. Système suivant la revendication 1, dans lequel l'unité mobile de données est un appareil mobile de service et/ou d'observation.

3. Système suivant l'une des revendications précédentes, dans lequel l'unité mobile de données est un clavier de secours.

4. Système suivant l'une des revendications précédentes, dans lequel le dispositif comporte un pont de court-circuit pouvant être branché.

5. Système suivant la revendication 4, dans lequel le pont de court-circuit pouvant être branché est commandé par un relais.

6. Système suivant la revendication 5, dans lequel le relais est commandé par un pont de court-circuit qui, lorsque l'unité mobile de données est à l'état connecté est fermé, et qui, lorsqu'il est en état déconnecté, est ouvert.

7. Système suivant la revendication 6, dans lequel le pont de court-circuit est intégré dans une liaison par enfichage, qui rend possible une mise en contact amovible d'une unité mobile de données sur une unité ( AP ) de connexion.
